# EUROPEAN PATENT SPECIFICATION

(11) **EP 0 556 891 B1**
(45) Date of publication and mention of the grant of the patent: **04.06.1997**
(21) Application number: 93200294.2
(22) Date of filing: 04.02.1993
(51) Int. Cl.: G11B 5/11, G11B 5/39, G11B 5/40

(54) **Magnetic head**
Magnetkopf
Tête magnétique

(30) Priority: 12.02.1992 EP 92200382
(43) Date of publication of application: 25.08.1993
(73) Proprietor: Philips Electronics N.V., 5621 BA Eindhoven (NL)
(72) Inventor: Van Doorn, Rudolf Alexander, NL-5656 AA Eindhoven (NL); De Jongh, Mathijs, NL-5656 AA Eindhoven (NL); Zieren, Victor, NL-5656 AA Eindhoven (NL)
(74) Representative: Schrijnemaekers, Hubert Joannes Maria

(56) References cited:
- US-A- 4 885 650
- PATENT ABSTRACTS OF JAPAN vol. 16, no. 407 (P-1411)27 August 1992
- PATENT ABSTRACTS OF JAPAN vol. 14, no. 165 (P-1030)30 March 1990
- PATENT ABSTRACTS OF JAPAN vol. 15, no. 87 (P-1173)28 February 1991
- PATENT ABSTRACTS OF JAPAN vol. 10, no. 274 (P-498)18 September 1986

## Description

The invention relates to a magnetic head having a head face and comprising a substrate and a multilayer structure provided on the substrate and having at least one transducing element and at least one transducing gap terminating in the head face.

A magnetic head of this type is known from US 4,321,640 (herewith incorporated by reference). The known thin-film magnetic head, which is used to detect magnetic fields on a magnetic tape moving along the magnetic head, comprises a substrate and a magneto-resistive element bridging a gap between two flux guides.

To protect the multilayer structure, it is common practice to provide a thin-film magnetic head with a protection block enclosing the multilayer structure between the substrate and the protection block. The protection block, which is also referred to as counter block, is adhered to the multilayer structure and forms a part of the head face.

To suppress electrostatic discharges during use of a thin-film magnetic head, it is important that the substrate and the protection block are earthed. Earthing an electrically conducting substrate of a thin-film magnetic head having one or more transducing elements may be realized by connecting an electrically conducting layer of the multilayer structure to the substrate via a through- connection in the multilayer structure and to provide the substrate with a connection face. However, the electrically conducting protection block secured to the multilayer structure by means of an adhesive cannot be earthed in such a manner. It has been found by experiment that the protection block could be earthed by making use of an electrically conducting paste between the protection block and the multilayer structure or, after the magnetic head has been built in a head housing, by means of a resilient earth contact of the head housing. However, both solutions are unsuitable for magnetic heads which must be mass-produced and must have a high degree of reliability.

JP-A-2 021 411, according to which claim 1 has been put in the two-part form, discloses the use of copper plating layers on the head face of a magnetic head to earth the magnetic cores of this head.

It is an object of the invention to provide a thin-film magnetic head having a protected multilayer structure and comprising reliable means which can easily be realized for inhibiting electrostatic discharges.

To this end the magnetic head according to the invention comprises an electrically conducting cladding provided on the head face, which cladding electrically connects a protection block provided on the multilayer structure to an earth conductor provided in the multilayer structure.

In this way a thin-film magnetic head is obtained in which the desired earthing of the protection block is realized in a surprisingly simple manner. For example, titanium carbide or titanium nitride may be used as an electrically conducting material for forming the cladding. An eminently suitable material is, however, chromium nitride which in addition to a satisfactory electrical conductivity has eminent wear-resistant properties. A cladding layer of chromium nitride has a dense, compact structure, a good adhesion and a great wear resistance and is suitable for guiding the conventional types of magnetic tapes such as CrO₂ or CoγFe₂O₃ tapes along the transducing gap. In order to guarantee satisfactory magnetic properties of the magnetic head, a cladding layer which is thinner than 100 nm is preferably provided. In practice the cladding layer has a thickness ranging between 20 and 100 nm. The cladding may be formed on the head face by means of known techniques such as sputtering or vapour deposition.

An embodiment of the magnetic head according to the invention is characterized in that the electrically conducting cladding electrically connects the protection block and the substrate to each other. In this thin-film magnetic head the protection block and the substrate are earthed by one and the same means. In this way a small resistance between the protection block and the substrate can be obtained so as to guarantee a controlled depletion of electric charge. The magnetic head obtained is thus eminently suitable for use as a DCC magnetic head for which said resistance is required to be smaller than 1 kΩ.

An embodiment of the magnetic head according to the invention is characterized in that the earth conductor formed as a thin film extends as far as the head face and engages the electrically conducting cladding in the head face. In this embodiment the multilayer structure is designed in such a way that the electrically conducting layer of the multilayer structure constituting the earth conductor terminates in the head face after the head face has been formed, for example, by means of a polishing treatment. While the electrically conducting cladding is being provided on the head face formed, a permanent electrical contact between the earth conductor and the cladding is automatically established.

An embodiment is characterized in that the earth conductor is connected to an earth contact face which is present at an outer side of the multilayer structure. A connection between the earth conductor and the earth contact face can be realized by providing a conductive material in a recess of a layer of the multilayer structure extending between the earth conductor and the earth contact face.

An embodiment is characterized in that the electrically conducting cladding makes contact with at least one electrically and magnetically conducting layer of the multilayer structure extending as far as the head face. Such a layer may form part of a magnetic circuit and in that case it is used as a magnetic flux guide. Connecting a flux guide to earth potential may contribute to the suppression of electrostatic discharges.

An embodiment is characterized in that at least an earth conductor portion adjoining the cladding is formed from the same material as the material from which said electrically and magnetically conducting layer of the multilayer structure extending as far as the head face is formed. The measure used in this embodiment prevents an electro-chemical reaction such as corrosion from occurring at the interface of the electrically and magnetically conducting layer and the cladding and/or the interface of the cladding and the earth conductor.

The invention will now be described in greater detail by way of example with reference to the accompanying drawings in which:
Figure 1 is a layout of a first embodiment of the magnetic head according to the invention,
Figure 2 is a diagrammatical cross-section taken on the line II-II of a transducing gap of the magnetic head shown in Figure 1, and
Figure 3 is a diagrammatic perspective elevational view of a second embodiment of the magnetic head according to the invention.

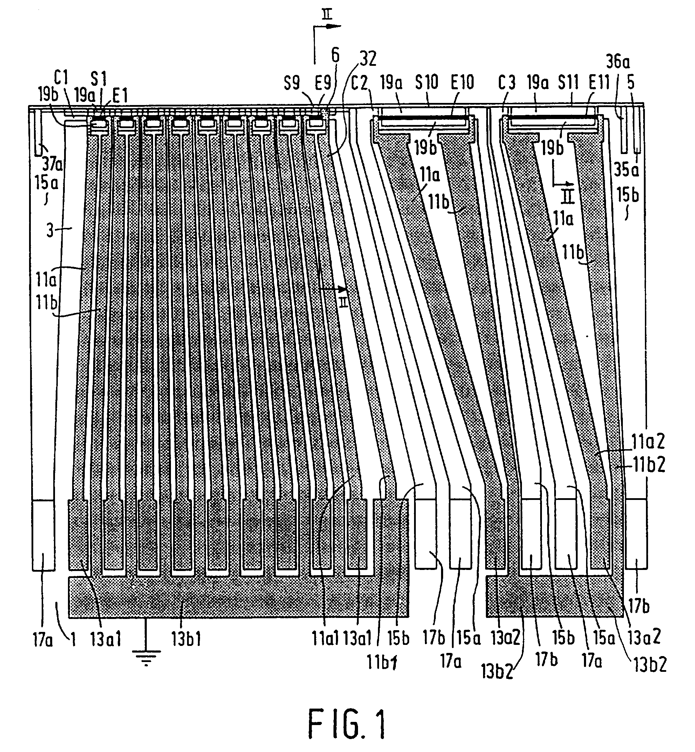

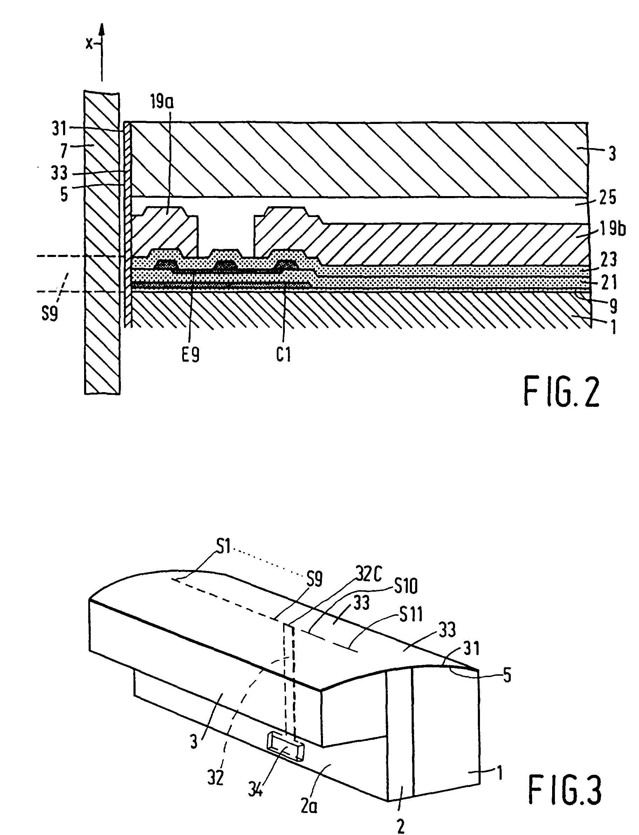

The thin-film magnetic head according to the invention shown in Figures 1 and 2 comprises a support or substrate 1,in this embodiment of an electrically poorly conducting magnetic material, for example, a ferrite on which a magnetic head structure 2 comprising magnetic layers, electric layers and insulation layers is provided. This multilayer structure 2 is protected by means of a protection block 3 of an electrically conducting non-magnetic material, for example Al₂O₃.TiC. The magnetic head has a head face 5 with eleven transducing gaps in this embodiment. Of the eleven transducing gaps a group of nine gaps S1 to S9 is intended for reading information in a digital form and a group of two gaps S10 and S11 is intended for reading information in an analog form from a record carrier 7 which moves along the magnetic head in a direction x. The gaps S1 to S9 for digital use generally have a shorter gap length than the gaps S10 and S11 for analog use. Alternatively, it is possible to choose such a gap length that both analog and digital information can be read by means of one and the same gap.

The magnetic head according to the invention comprises an insulation layer 9 provided on the substrate 1, which layer carries three electric conductors C1, C2 and C3 in this embodiment, which are present at some distance from the head face 5. The magnetic head also comprises eleven magneto-resistive elements E1 to E11, further referred to as MR elements which comprise, for example, an Ni-Fe layer on which a barberpole structure of, for example, Au may be provided. Each MR element E1 to E9 is provided with a pair of connection tracks 11a1 and 11b1 which are further referred to as first connection tracks and terminate in first connection faces 13a1 and 13b1, respectively. The MR elements E10 and E11 are similarly provided with first connection tracks 11a2 and 11b2 which terminate in first connection faces 13a2 and 13b2, respectively. In the embodiment shown the nine first connection faces 13b1 are formed as one common connection face. The two first connection faces 13b2 are interconnected. Both the first connection tracks and the first connection faces are preferably made of Au. It is to be noted that an MR element provided with barberpole strips is known *per se* and is described*, inter alia*, in US-A 4,052,748 (herewith incorporated by reference).

Said electric conductors C1, C2 and C3 are used for driving the MR elements E1 to E9, E10 and E11 and are each provided with a pair of second connection tracks 15a and 15b which terminate in second connection faces 17a and 17b, respectively. The conductors C1, C2 and C3 and the connection tracks 15a and 15b are preferably made of Au.

The magnetic head also comprises eleven pairs of flux guides of a soft-magnetic material, for example NiFe or AlFeSi, with each pair comprising a first or front flux guide 19a and, spaced apart therefrom, a second or rear flux guide 19b. The front flux guides 19a extend as far as the head face 5 for cooperation with the magnetic record carrier 7. The MR elements E1 to E11 are present between the substrate 1 and the flux guides, each MR element forming a bridge between a first and a second flux guide 19a and 19b. In certain constructions and for some uses it is possible to omit the rear flux guides. It is also possible to start from an electrically conducting non-magnetic substrate and to provide extra flux guides.

The electric conductors, the MR elements and the flux guides are electrically insulated with respect to one another by a number of insulation layers of an electrically insulating material, for example a polymer. The insulation layers are denoted by the reference numerals 9, 21 and 23 in Figure 2. A further insulation layer 25, for example in the form of an adhesive layer is present between the joint flux guides 19a and 19b and the counter block 3.

An electrically conducting cladding 31 forming a contact face 33 for cooperation with a tape-shaped record carrier 7 is provided on the head face 5. The cladding 31 formed in this embodiment from a wear-resistant layer of chromium nitride having a thickness of 50 nm makes electrical contact with an earth conductor 32 present in the multilayer structure 2. The earth conductor 32, which is formed by one of the electrically conducting connection tracks 11b1, terminates in the head face 5 where an electric connection 6 with the conducting layer of chromium nitride is present, and which can be earthed *via* the joint connection face 13b1. If desired, the faces 13b1 and 13b2 may be electrically interconnected.

Since the head face 5 is formed by the substrate 1 as well as the protection block 3, the substrate 1 and the protection block 3 are both electrically interconnected and connected to the earth conductor 32 by means of the electrically conducting cladding 31. Moreover, the magnetic flux guides 19a terminating in the head face 5 are connected to earth potential by means of the cladding 31.

The thin-film magnetic head diagrammatically shown in Figure 3 is largely identical to the magnetic head described hereinbefore. For this reason, corresponding elements and layers of the two magnetic heads shown are denoted by the same reference numerals.

The magnetic head of Figure 3 has a head face 5 and comprises a conducting substrate 1 of, for example Al₂O₃.TiC, a multilayer structure 2 provided on the substrate and having a cluster of nine transducing gaps S1 to S9 for digital use and two transducing gaps S10 and S11 for analog use. The multilayer structure 2 also accommodates an electrically conducting earth conductor 32 formed as a thin film and extending as far as the head face 5. In the head face 5 the earth conductor constitutes a contact face 32c with an electrically conducting cladding 33 of, for example, chromium nitride provided on the head face 5, which cladding electrically interconnects both the substrate 1 and a conducting protection block 3 of, for example Al₂O₃.TiC provided on the multilayer structure, and which connects the substrate 1 and the protection block 3 to the earth conductor 32. The earth conductor 32 is connected to an earth contact face 34 present at an outer side 2a of the multilayer structure 2. The earth conductor 32 may be formed from the same material as the flux guides (not shown in this embodiment) terminating in the head face and present in the multilayer structure.

It is to be noted that the invention is not limited to the embodiments shown. Magnetic heads having a smaller or larger number than said number of transducing gaps, as well as magnetic heads having one or more inductive transducing elements are also within the scope of the claims.

## Claims

1. A magnetic head having a head face (5) and comprising a substrate (1), a multilayer structure (2) provided on the substrate (1) and having at least one transducing element (E1-E11) and at least one transducing gap (S1-S11) terminating in the head face (5), a protection block (3) provided on the multilayer structure (2) and an electrically conducting cladding (31) provided on the head face (5), characterized in that the cladding (31) electrically connects the protection block (3) provided on the multilayer structure (2) to an earth conductor (32) provided in the multilayer structure (2).

2. A magnetic head as claimed in Claim 1, characterized in that the electrically conducting cladding (31) electrically connects the protection block (3) and the substrate (1) to each other.

3. A magnetic head as claimed in Claim 1 or 2, characterized in that the earth conductor (32) formed as a thin film extends as far as the head face (5) and engages the electrically conducting cladding (31) in the head face (5).

4. A magnetic head as claimed in Claim 1, 2 or 3, characterized in that the earth conductor (32) is connected to an earth contact face which is present at an outer side of the multilayer structure (2).

5. A magnetic head as claimed in Claim 1, 2, 3 or 4, characterized in that the electrically conducting cladding (31) makes contact with at least one electrically and magnetically conducting layer (32) of the multilayer structure (2) extending as far as the head face (5).

6. A magnetic head as claimed in Claim 1, 2, 3, 4 or 5, characterized in that the cladding (31) is in the form of a layer of a wear-resistant material.

7. A magnetic head as claimed in Claim 1, 2, 3, 4, 5 or 6, characterized in that the cladding (31) is a layer having a thickness ranging between 20 and 100 nm.

8. A magnetic head as claimed in Claim 1, 2, 3, 4, 5, 6 or 7, characterized in that the cladding (31) comprises substantially chromium nitride.

9. A magnetic head as claimed in Claim 5, characterized in that at least an earth conductor portion (6) adjoining the cladding (31) is formed from the same material as the material from which said electrically and magnetically conducting layer (32) of the multilayer structure (2) extending as far as the head face (5) is formed.

## Patentansprüche

1. Magnetkopf mit einer Kopffläche (5) und mit einem Träger (1) und mit einer auf dem Träger (1) angebrachten Mehrschichtstruktur (2) mit mindestens einem Übertragungselement (E1 - E11) und mit mindestens einem in der Kopffläche (5) endenden Übertragungsspalt (S1 - S11), wobei auf der Mehrschichtstruktur (2) ein Schutzblock (3) vorgesehen ist und mit einer elektrisch leitenden Verkleidung (31) auf der Kopffläche (5) dadurch gekennzeichnet, daß die Verkleidung (31) den Schutzblock (3) auf der Mehrschichtstruktur (2) mit einem in der Mehrschichtstruktur (2) vorgesehenen Erdungsleiter (32) elektrisch verbindet.

2. Magnetkopf nach Anspruch 1, dadurch gekennzeichnet, daß die elektrisch leitende Verkleidung (31) den Schutzblock (3) und den Träger (1) elektrisch miteinander verbindet.

3. Magnetkopf nach Anspruch 1 oder 2, dadurch gekennzeichnet, daß der als Dünnfilm ausgebildete Erdungsleiter (32) sich bis an die Kopffläche (5) erstreckt und an der elektrisch leitenden Verkleidung (31) in der Kopffläche (5) anliegt.

4. Magnetkopf nach Anspruch 1, 2 oder 3, dadurch gekennzeichnet, daß der Erdungsleiter (32) mit einer auf einer Außenseite der Mehrschichtstruktur (2) befindlichen Erdungskontaktfläche verbunden ist.

5. Magnetkopf nach Anspruch 1, 2, 3 oder 4, dadurch gekennzeichnet, daß die elektrisch leitende Verkleidung (31) mit mindestens einer sich bis an die Kopffläche (5) erstreckenden elektrisch und magnetisch leitenden Schicht (32) der Mehrschichtstruktur (2) kontaktiert ist.

6. Magnetkopf nach Anspruch 1, 2, 3, 4 oder 5, dadurch gekennzeichnet, daß die Verkleidung (32) in Form einer Schicht aus einem abnutzungsfesten Material vorgesehen ist.

7. Magnetkopf nach Anspruch 1, 2, 3, 4, 5 oder 6, dadurch gekennzeichnet, daß die Verkleidung (31) eine Schicht mit einer Dicke im Bereich zwischen 20 und 100 nm ist.

8. Magnetkopf nach Anspruch 1, 2, 3, 4, 5, 6 oder 7, dadurch gekennzeichnet, daß die Verkleidung 31 im wesentlichen Chromnitrid aufweist.

9. Magnetkopf nach Anspruch 5, dadurch gekennzeichnet, daß wenigstens ein Erdungsleiterteil (6) grenzend an die Verkleidung (31) aus demselben Material gebildet ist wie das Material, aus dem die genannte elektrisch und magnetisch leitende Schicht (32) der Mehrschichtstruktur (2) gebildet ist, die sich bis an die Kopffläche (5) erstreckt.

## Revendications

1. Tête magnétique présentant une face de tête (5) et comprenant un substrat (1), une structure à plusieurs couches (2) appliquée sur le substrat (1) et présentant au moins un élément de transmission (E1 - E11) et au moins un entrefer de transmission (S1 - S11) se terminant dans la face de tête (5), un bloc de protection (3) appliqué sur la structure à plusieurs couches (2) et un revêtement électroconducteur (31) appliqué sur la face de tête (5), caractérisée en ce que le revêtement (31) assure la connexion électrique du bloc de protection (3) appliqué sur la structure à plusieurs couches (2) à un conducteur de terre (32) appliqué dans la structure à plusieurs couches (2).

2. Tête magnétique selon la revendication 1, caractérisée en ce que le revêtement électroconducteur (31) assure la connexion électrique entre le bloc de protection (3) et le substrat (1).

3. Tête magnétique selon les revendications 1 ou 2, caractérisée en ce que le conducteur de terre (32) formé comme un film mince s'étend jusqu'à la face de tête (5) et s'applique contre le revêtement électroconducteur (31) dans la face de tête (5).

4. Tête magnétique selon les revendications 1, 2 ou 3, caractérisée en ce que le conducteur de terre (32) est connecté à une face de contact de terre présente à une face extérieure de la structure à plusieurs couches (2).

5. Tête magnétique selon les revendications 1, 2, 3 ou 4, caractérisée en ce que le revêtement électroconducteur (31) est en contact avec au moins une couche électriquement et magnétiquement conductrice (32) de la structure à plusieurs couches (2) s'étendant jusqu'à la face de tête (5).

6. Tête magnétique selon les revendications 1, 2, 3, 4 ou 5, caractérisée en ce que le revêtement (31) est sous forme d'une couche en un matériau résistant à l'usure.

7. Tête magnétique selon les revendications 1, 2, 3, 4, 5 ou 6, caractérisée en ce que le revêtement (31) est une couche dont l'épaisseur est située dans la gamme comprise entre 20 et 100 mm.

8. Tête magnétique selon les revendications 1, 2, 3, 4, 5, 6 ou 7, caractérisée en ce que le revêtement (31) comprend essentiellement du nitrure de chrome.

9. Tête magnétique selon la revendication 5, caractérisée en ce qu'au moins une partie de conducteur de terre (6) voisine du revêtement (31) est formée à partir du même matériau que le matériau dont est réalisée la couche électriquement et magnétiquement conductrice (32) de la structure à plusieurs couches (2) s'étendant jusqu'à la face de tête (5).
